(19) Europäisches Patentamt
European Patent Office
Office européen des brevets

(11) EP 4 261 186 A1

(12) **EUROPEAN PATENT APPLICATION**
published in accordance with Art. 153(4) EPC

(43) Date of publication:
**18.10.2023 Bulletin 2023/42**

(21) Application number: **21903276.0**

(22) Date of filing: **02.12.2021**

(51) International Patent Classification (IPC):
***C01B 33/02*** (2006.01) ***H01M 4/36*** (2006.01)
***H01M 4/38*** (2006.01) ***H01M 4/58*** (2010.01)
***H01M 4/587*** (2010.01) ***H01G 11/30*** (2013.01)

(52) Cooperative Patent Classification (CPC):
**C01B 33/02; H01G 11/30; H01M 4/36; H01M 4/38; H01M 4/58; H01M 4/587;** Y02E 60/10

(86) International application number:
**PCT/JP2021/044184**

(87) International publication number:
**WO 2022/124172 (16.06.2022 Gazette 2022/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.12.2020 JP 2020203288**

(71) Applicant: **DIC Corporation**
**Tokyo 174-8520 (JP)**

(72) Inventors:
- **ZHU Peixin**
  **Sakura-shi, Chiba 285-8668 (JP)**
- **KAWASE Kenichi**
  **Sakura-shi, Chiba 285-8668 (JP)**
- **SHIMIZU Masayoshi**
  **Sakura-shi, Chiba 285-8668 (JP)**
- **KATANO Satoshi**
  **Sakura-shi, Chiba 285-8668 (JP)**

(74) Representative: **TBK**
**Bavariaring 4-6**
**80336 München (DE)**

(54) **NEGATIVE ELECTRODE ACTIVE MATERIAL AND NONAQUEOUS ELECTROLYTE SECONDARY BATTERY**

(57) Provided are a negative electrode active material having excellent charge-discharge characteristics (charge-discharge capacity, initial coulombic efficiency, and cycle characteristics) and a nonaqueous electrolyte secondary battery containing the negative electrode active material. The negative electrode active material according to the present invention is a negative electrode active material containing composite particles in which silicon nanoparticles are dispersed inside a matrix containing silicon oxycarbide and a carbonaceous phase. The negative electrode active material has a crystalline particle size of 40 nm or less determined by the Scherrer method from a full width at half maximum (FWHM) of a diffraction line attributed to Si(111) around 2θ = 28.4° in analysis of an X-ray diffraction pattern.

[Fig. 1]

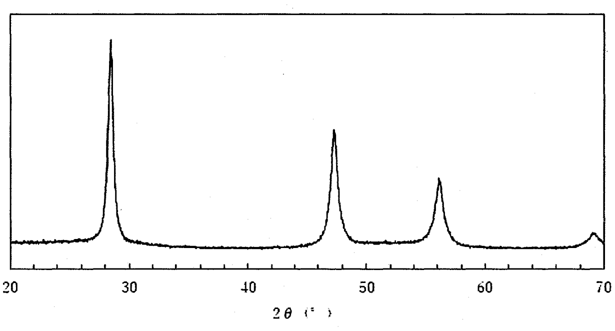


EP 4 261 186 A1

## Description

### Technical Field

The present invention relates to a negative electrode active material and a nonaqueous electrolyte secondary battery containing the negative electrode active material.

### Background Art

In recent years, there is an increasing demand for compact, high-capacity secondary batteries with the spread of portable electronic devices such as smartphones. Among these, lithium-ion secondary batteries (may be denoted as LIBs) are being rapidly applied to electric vehicles (EVs), and their industrial applications continue to expand. Although graphite active materials (natural and artificial) as a type of carbon are being widely used as negative electrode materials for lithium-ion secondary batteries, the theoretical capacity density of graphite is low (372 mAh/g), and due to the advance of lithium-ion secondary battery construction technology, battery capacity improvement is approaching its limit.

Silicon (Si) can form an alloy (intermetallic compound) with metallic lithium and can thus electrochemically absorb and release lithium ions. The theoretical capacity of lithium ion absorption and release capacity is 4,200 mAh/g when $Li_{22}Si_5$ is formed, which enables much higher capacity than that of graphite negative electrodes.

However, silicon undergoes a large volume change by a factor of three to four along with absorption and release of lithium ions. Thus, there is a problem in that when a charge-discharge cycle is performed, repeated expansion and contraction collapse and pulverize the silicon, resulting in an inability to achieve a good cycle life.

It is known that if silicon particles are made smaller in size, mechanical structural breakdown can be avoided during insertion and escape of lithium ions. However, the spatial/electrical isolation of some of the silicon nanoparticles lying in an electrode material has caused a new problem of significant degradation of battery lifetime characteristics. In addition, there is a problem in that as the silicon nanoparticles become smaller in size, their specific surface area increases to a few tens of $m^2/g$ or more, and during charging and discharging, the amount of a solid-phase interface electrolyte degradation product (which is hereinafter referred to as SEI and the principal cause of the occurrence of irreversible capacity) generated on the surface becomes larger in proportion to the increase, which significantly reduces initial coulombic efficiency.

PTL 1 to PTL 3 below describe silicon-based compounds for use as negative electrode active materials in nonaqueous electrolyte secondary batteries such as LIBs.

### Citation List

#### Patent Literature

PTL 1: Japanese Unexamined Patent Application Publication (Translation of PCT Application) No. 2018-502029
PTL 2: Japanese Unexamined Patent Application Publication No. 2019-114559
PTL 3: Japanese Patent No. 5892264

### Summary of Invention

#### Technical Problem

In the conventional Si-based compounds described in PTL 1 to PTL 3, there is no idea to control silicon particle state inside a matrix containing silicon oxycarbide (SiOC) and a carbonaceous phase, and control of a negative electrode active material matrix structure and the silicon particle state is not well done, thus presenting a problem of charge-discharge performance, especially cycle characteristics when used for secondary batteries, leaving room for improvement.

In view of the above circumstances, an object of the present invention is to provide a negative electrode active material having excellent charge-discharge characteristics (charge-discharge capacity, initial coulombic efficiency, and cycle characteristics) and a nonaqueous electrolyte secondary battery containing the negative electrode active material.

#### Solution to Problem

The inventors of the present invention have conducted earnest study to solve the above problem to focus on

the crystallite size of silicon nanoparticles inside a matrix containing silicon oxycarbide and a carbonaceous phase. It has been found that by controlling the crystallite size to be within a specific range, the electrochemical characteristics such as the resistance characteristics of a matrix structure can be optimized and silicon structure collapse can be inhibited during charging and discharging, thereby making the performance of silicon nanoparticles present inside a negative electrode active material more likely to be exhibited, and consequently, charge-discharge performance, especially cycle characteristics further improve, which has led to the present invention.

Specifically, the present invention relates to the following.

[1] A negative electrode active material containing composite particles in which silicon nanoparticles are dispersed inside a matrix containing silicon oxycarbide and a carbonaceous phase, the negative electrode active material having a crystalline particle size of 40 nm or less determined by the Scherrer method from a full width at half maximum (FWHM) of a diffraction line attributed to Si(111) around 2θ = 28.4° in analysis of an X-ray diffraction pattern.

[2] The negative electrode active material according to [1], in which the matrix in the composite particles has a carbonaceous phase content in a range of 30% by weight to 85% by weight of a matrix total weight.

[3] The negative electrode active material according to [1], in which the matrix in the composite particles has a carbonaceous phase content in a range of 40% by weight to 70% by weight of a matrix total weight.

[4] The negative electrode active material according to any one of [1] to [3], in which the composite particles have a specific surface area (BET) in a range of 1 $m^2/g$ to 20 $m^2/g$.

[5] The negative electrode active material according to any one of [1] to [4], in which the composite particles have a true density higher than 1.60 $g/cm^3$ and less than 2.40 $g/cm^3$.

[6] The negative electrode active material according to any one of [1] to [5], in which the composite particles each have a surface with a coating layer mainly containing low crystalline carbon with an average thickness of 10 nm or more and 300 nm or less.

[7] A nonaqueous electrolyte secondary battery containing the negative electrode active material according to any one of [1] to [6].

Advantageous Effects of Invention

The negative electrode active material according to the present invention has excellent charge-discharge performance, especially cycle characteristics, when used for a secondary battery. By using the negative electrode active material according to the present invention for nonaqueous electrolyte secondary batteries, charge-discharge capacity, initial coulombic efficiency, and cycle characteristics can be exhibited simultaneously at a high level.

Brief Description of Drawings

FIG. 1 is a graph of an X-ray diffraction pattern of Example 1.

FIG. 2 is a graph of an X-ray diffraction pattern of Comparative Example 1.

Description of Embodiments

A negative electrode active material according to the present invention is a negative electrode active material containing composite particles in which silicon nanoparticles are dispersed inside a matrix containing silicon oxycarbide (SiOC) and a carbonaceous phase, the negative electrode active material having a crystallite size of the silicon nanoparticles of 40 nm or less determined by the Scherrer method from a full width at half maximum (FWHM) of a diffraction line attributed to Si (111) around 2θ = 28.4° in analysis of an X-ray diffraction pattern. An example of the X-ray diffraction pattern in the present invention is as illustrated in FIG. 1.

The Scherrer method is a shape factor that links the relation between the size of crystallites contained in a solid and the peak width of a diffraction pattern and is expressed by the following equation based on the relation between a diffraction peak width and a crystallite size in X-ray crystal structure analysis of the silicon nanoparticles in the negative electrode active material.

$$L = K\lambda/(\beta\cos\theta)$$

K: Shape factor

λ: X-ray wavelength

β: Peak FWHM (in radians)
θ: Bragg angle
L: Crystallite size

Examples of an X-ray crystal structure analysis (Cu-Kα) apparatus include New D8 ADVANCE manufactured by Bruker AXS. Based on the FWHM, the crystallite size can be determined from the above Scherrer's equation. The FWHM can be determined by performing appropriate background processing using analysis software such as XRD analysis software of DIFFAC.EVA (manufactured by Bruker AXS).

The crystallite size is less than 40 nm or less and preferably 5 nm to 35 nm and more preferably 10 nm to 30 nm. A crystallite size being 40 nm or less produces the effect of inhibiting silicon structure collapse during charging and discharging when used for a secondary battery.

The silicon nanoparticles are silicon (zero-valent) particles that have been nanosized by pulverization or the like. The presence of these silicon (zero-valent) particles can improve charge-discharge capacity and initial coulombic efficiency when used for a secondary battery. The present invention further controls the crystallite size of the silicon nanoparticles and thus produces the effect of inhibiting silicon structure collapse as described above.

Pulverization of the silicon nanoparticles can be performed, using pulverizers such as ball mills, bead mills, and jet mills. Pulverization may be wet pulverization, and as an organic solvent, which is not limited to a particular solvent composition so long as the pulverization process works well, alcohols, ketones, and the like are suitably used, and aromatic hydrocarbon-based solvents such as toluene, xylene, naphthalene, and methyl naphthalene can also be used.

The content of the silicon nanoparticles in the composite particles is not limited to a particular content, but battery capacity can be controlled by adjusting the content of the silicon nanoparticles. In the present invention, the content ratio of the silicon nanoparticles in the composite particles is preferably 1 to 80% by mass, more preferably 10 to 70% by mass, and even more preferably 20 to 60% by mass. The content ratio of the silicon particles being 20% by mass or more can increase the charge-discharge capacity when used for a battery negative electrode material, provides a larger capacity advantage over graphite as the negative electrode material, and can maintain the initial coulombic efficiency at a high level. On the other hand, by setting the content ratio of the silicon particles to 60% by mass or less, the silicon particles may be sufficiently covered by the matrix containing silicon oxycarbide and the carbonaceous phase, and active material volume expansion and contraction changes during charging and discharging may be effectively reduced, resulting in improved cycle characteristics.

The average particle size (D50) of the silicon particles is preferably 10 to 300 nm, more preferably 20 to 250 nm, and even more preferably 30 to 200 nm. The average particle size (D50) can be measured by dynamic light scattering using a laser particle size analyzer or the like. The silicon particles with a large size exceeding 300 nm form large lumps, easily cause a pulverization phenomenon during charging and discharging, and are thus assumed to tend to reduce the charge-discharge performance of the active material. On the other hand, the silicon particles with a small size less than 10 nm are extremely fine, and thus the silicon particles easily aggregate with each other. Thus, it is difficult to uniformly disperse the small-particle silicon into the active material, and in addition, the surface active energy of the fine particles is high, and in addition, there is also a tendency for more by-products and the like to be on the surface of the small-particle silicon by high-temperature firing of the active material, which leads to a significant decrease in the charge-discharge performance.

The average particle size (D50) is the particle size at which accumulation is 50% when a cumulative volume distribution curve is drawn from the small size side in the particle size distribution of the silicon nanoparticles in the negative electrode active material. The average particle size (D50) can be measured with a laser diffraction particle size distribution analyzer (SALD-3000J manufactured by Shimadzu Corporation, for example).

The negative electrode active material according to the present invention contains composite particles in which silicon nanoparticles are dispersed inside a matrix containing silicon oxycarbide (SiOC) and a carbonaceous phase as described above. Silicon oxycarbide (SiOC) is a structure having a Si-O-C skeleton structure containing silicon (except for zero-valent), oxygen, and carbon. SiOC can be formed by firing a polysiloxane compound as described in the method of production below. The details of the Si-O-C skeleton structure are described in the method of production below as a polysiloxane structure.

Carbon (C) is present in the carbonaceous phase, and the Si-O-C skeleton structure of SiOC forming the matrix and C are present in a three-dimensionally entangled manner. This carbon leads to the effect of reducing the resistance of the active material and, when used in secondary battery negative electrodes, is believed to be able to flexibly follow the volume change of silicon particles during charging and discharging. Carbon can be formed by firing carbon compounds such as phenolic resins (Ph resins), amorphous carbon, or resins as a carbon source such as soft carbon as described in the method of production below, for example.

In the matrix in the composite particles, the proportion of the carbonaceous phase present therein is important, and its content is preferably 30% by weight to 85% by weight of a matrix total weight. The content of the carbonaceous phase is more preferably 40% by weight to 70% by weight and even more preferably 45% by weight to 60% by weight.

When the content of the carbonaceous phase is in the above range, the active material resistance reduction effect can be sufficiently obtained, and in addition, the occurrence of SEI, which is the main cause of the occurrence of irreversible capacitance, can be inhibited.

The average particle size of the composite particles is, for example, 0.1 um or more and 20 um or less and preferably 0.5 um or more and 10 um or less. If the average particle size is too small, the amount of SEI generated during charging and discharging increases along with a significant increase in the specific surface area, and thereby reversible charge-discharge capacity per unit volume may decrease. Conversely, if the average particle size is too large, an electrode film may become difficult to produce and may delaminate from a current collector. The average particle size is a value measured as a weight average D50 (median diameter) in particle size distribution measurement by laser light diffraction.

The specific surface area (BET) in the composite particles of the negative electrode active material according to the present invention is preferably 1 $m^2/g$ to 20 $m^2/g$. The specific surface area (BET) is more preferably 1 $m^2/g$ to 18 $m^2/g$ and even more preferably 1 $m^2/g$ to 10 $m^2/g$. When the specific surface area is in the above range, the amount of a solvent absorbed during electrode production can be maintained at an appropriate level, and the amount of a binding agent used to maintain bindability can also be maintained at an appropriate level. The specific surface area (BET: Brunauer-Emmett-Teller) can be determined from nitrogen gas adsorption measurement and can be easily measured by using a general-purpose specific surface area measurement apparatus.

The true density of the composite particles in the negative electrode active material according to the present invention is preferably higher than 1.60 $g/cm^3$ and less than 2.40 $g/cm^3$. The true density is more preferably higher than 1.70 $g/cm^3$ and less than 2.35 $g/cm^3$. When the true density is in the above range, the composition ratio of components forming the composite particles and the porosity of the material are in a suitable range, and the charge-discharge performance of the material is easily exhibited. The true density can be measured by using a general-purpose true density measurement apparatus.

The composite particles of the negative electrode active material according to the present invention may each have a surface with a coating layer mainly containing low crystalline carbon with an average thickness of 10 nm to 300 nm. The average thickness is preferably 20 nm or more and 200 nm or less. The composite particles each having the coating layer with the average thickness can protect the silicon nanoparticles exposed to the particle surface, thereby improves the chemical stability and thermal stability of the composite particles, and can thus consequently further inhibit the reduction in charge-discharge performance.

<Description of Method of Production>

The following describes an example of a method for producing the negative electrode active material according to the present invention.

<Production of Silicon Nanoparticle Suspension (Silicon Slurry)

As the method for producing the silicon nanoparticles, which is not limited to a particular method, the build-up method, which is silicon synthesis, or the break-down process, which is silicon pulverization, may be used. The silicon nanoparticles obtained by the build-up method may be surface-modified with an organosilane as a surfactant to prevent silicon surface peroxidation or the like. In the breakdown process of the pulverizing type, when a wet powder pulverizing apparatus is used, a dispersant may be used in order to promote the pulverization of silicon particles in an organic solvent. The wet pulverizing apparatus is not limited to a particular apparatus. Examples thereof include roller mills, jet mills, high-speed rotary pulverizers, container-driven mills, and bead mills.

Any solvent can be used in the above method of production in a wet process. The organic solvent, which is not limited to a particular organic solvent, only needs to fail to chemically react with silicon. Examples thereof include acetone, methyl ethyl ketone, methyl isobutyl ketone, and diisobutyl ketone as ketones; ethanol, methanol, normal propyl alcohol, and isopropyl alcohol as alcohols; and benzene, toluene, and xylene as aromatics.

The type of the dispersant in the above method of production is not limited to a particular type, and aqueous or nonaqueous, known and customary commercially available products can be used, in which the use of a nonaqueous dispersant is preferred in order to avoid excessive surface oxidation of silicon particles. Examples of the type of the nonaqueous dispersant include a polymeric type (polyether-based, polyalkylene polyamine-based, polycarboxylic acid partial alkyl ester-based, and the like), a low molecular type (polyhydric alcohol ester-based, alkyl polyamine-based, and the like), and polyphosphate-based as an inorganic type.

<Production of Negative Electrode Active Material Precursor>

The method for producing the negative electrode active material according to the present invention is not limited

to a particular method, and when produced in a wet process, the negative electrode active material according to the present invention can be produced by going through Step 1 of dispersing a silicon nanoparticle suspension (silicon slurry) and a mixture or a polymer of a polysiloxane compound and a carbon source resin with each other and drying the dispersed product to obtain a mixture, Step 2 of firing the mixture obtained in Step 1 above in an inert atmosphere to obtain a fired product, and Step 3 of pulverizing the fired product obtained in Step 2 above to obtain a negative electrode active material, for example.

<Description of Each Step>

<Step 1>

The concentration of the silicon nanoparticle suspension (silicon slurry), which is not limited to a particular concentration, ranges from 5 to 40% by mass and is more preferably prepared at 10 to 30% by mass. The polysiloxane compound for use in the production of the negative electrode active material according to the present invention is not limited to a particular compound so long as it is a resin containing at least one of a polycarbosilane structure, a polysilazane structure, a polysilane structure, and a polysiloxane structure. The polysiloxane compound may be a single resin of these structures or a composite resin having one of them as a segment and chemically bonding with another polymer segment. There are copolymers with graft, block, random, alternating, and the like as the forms of combination. Examples thereof include a composite resin having a graft structure chemically bonding with a polysiloxane segment and a side chain of the polymer segment and a composite resin having a block structure in which the polysiloxane segment chemically bonds with the end of the polymer segment.

The polysiloxane segment preferably has a structural unit represented by General Formula (S-1) below and/or General Formula (S-2) below.

[Chemical Formula 1]

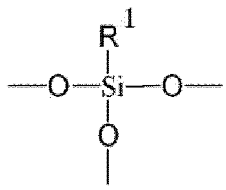

(S-1)

[Chemical Formula 2]

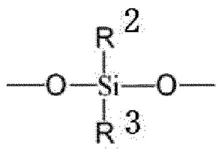

(S-2)

(In General Formulae (S-1) and (S-2) above, $R^1$ represents an aromatic hydrocarbon substituent, an alkyl group, an epoxy group, a carboxy group, or the like. $R^2$ and $R^3$ each indicate an alkyl group, a cycloalkyl group, an aryl group, an aralkyl group, an epoxy group, a carboxy group, or the like.)

Examples of the alkyl group include a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a 1-methylbutyl group, a 2-methylbutyl group, a 1,2-dimethylpropyl group, a 1-ethylpropyl group, a hexyl group, an isohexyl group, a 1-methylpentyl group, a 2-methylpentyl group, a 3-methylpentyl group, a 1,1-dimethylbutyl group, a 1,2-dimethylbutyl group, a 2,2-dimethylbutyl group, a 1-ethylbutyl group, a 1,1,2-trimethylpropyl group, a 1,2,2-trimethylpropyl group, a 1-ethyl-2-methylpropyl group, and a 1-ethyl-1-methylpropyl group. Examples of the cycloalkyl group include a cyclopropyl group, a cyclobutyl group, a cyclopentyl group, and a cyclohexyl group.

Examples of the aryl group include a phenyl group, a naphthyl group, a 2-methylphenyl group, a 3-methylphenyl group, a 4-methylphenyl group, a 4-vinylphenyl group, and a 3-isopropylphenyl group.

Examples of the aralkyl group include a benzyl group, a diphenylmethyl group, and a naphthylmethyl group.

Examples of the polymer segment that the polysiloxane compound has, other than the polysiloxane segment, include polymer segments such as vinyl polymer segments such as acrylic polymers, fluoro olefin polymers, vinyl ester polymers, aromatic vinyl polymers, and polyolefin polymers, polyurethane polymer segments, polyester polymer segments, and polyether polymer segments. Among them, vinyl polymer segments are preferred.

The polysiloxane compound may be a composite resin in which the polysiloxane segment and the polymer segment bond with each other in the structure shown by Structural Formula (S-3) below and may have a three-dimensional reticulate polysiloxane structure.

[Chemical Formula 3]

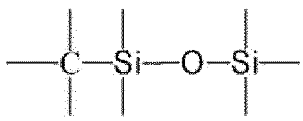
(S-3)

(In the formula, the carbon atom is a carbon atom forming the polymer segment, and the two silicon atoms are silicon atoms forming the polysiloxane segment.)

The polysiloxane segment of the polysiloxane compound may have a functional group in the polysiloxane segment that can react upon heating, such as a polymerizable double bond. Heat treatment on the polysiloxane compound prior to thermal decomposition allows a cross-linking reaction to proceed, making it solid, which can facilitate thermal decomposition treatment.

Examples of the polymerizable double bond include a vinyl group and a (meth)acryloyl group. Two or more polymerizable double bonds are preferably present in the polysiloxane segment, 3 to 200 are more preferably present, and 3 to 50 are even more preferably present. By using a composite resin with two or more polymerizable double bonds as the polysiloxane compound, a cross-linking reaction can be easily caused to proceed.

The polysiloxane segment may have a silanol group and/or a hydrolyzable silyl group. Examples of a hydrolyzable group in the hydrolyzable silyl group include halogen atoms, an alkoxy group, a substituted alkoxy group, an acyloxy group, a phenoxy group, a mercapto group, an amino group, an amide group, an aminooxy group, an iminooxy group, and an alkenyloxy group. These groups are hydrolyzed, whereby the hydrolyzable silyl group become a silanol group. In parallel with the thermosetting reaction, a hydrolytic condensation reaction proceeds between the hydroxy group in the silanol group and the hydrolyzable group in the hydrolyzable silyl group to obtain a solid polysiloxane compound.

The silanol group referred to in the present invention is a silicon-containing group having a hydroxy group directly bonding with the silicon atom. The hydrolyzable silyl group referred to in the present invention is a silicon-containing group having a hydrolyzable group directly bonding with the silicon atom. Specific examples thereof include a group represented by General Formula (S-4) below.

[Chemical Formula 4]

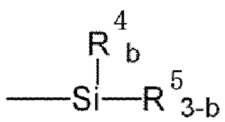
(S-4)

(In the formula, $R^4$ is a monovalent organic group such as an alkyl group, an aryl group, or an aralkyl group, and $R^5$ is a halogen atom, an alkoxy group, an acyloxy group, an allyloxy group, a mercapto group, an amino group, an amide group, an aminooxy group, an iminooxy group, or an alkenyloxy group. b is an integer of 0 to 2.)

Examples of the alkyl group include a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a 1-methylbutyl group, a 2-methylbutyl group, a 1,2-dimethylpropyl group, a 1-ethylpropyl group, a hexyl group, an isohexyl group, a 1-methylpentyl group, a 2-methylpentyl group, a 3-methylpentyl group, a 1,1-dimethylbutyl group, a 1,2-dimethylbutyl group, a 2,2-dimethylbutyl group, a 1-ethylbutyl group, a 1,1,2-trimethylpropyl group, a 1,2,2-trimethylpropyl group, a 1-ethyl-2-methylpropyl group, and a 1-ethyl-1-methylpropyl group.

Examples of the aryl group include a phenyl group, a naphthyl group, a 2-methylphenyl group, a 3-methylphenyl group, a 4-methylphenyl group, a 4-vinylphenyl group, and a 3-isopropylphenyl group.

Examples of the aralkyl group include a benzyl group, a diphenylmethyl group, and a naphthylmethyl group.

Examples of the halogen atom include a fluorine atom, a chlorine atom, a bromine atom, and an iodine atom.

Examples of the alkoxy group include a methoxy group, an ethoxy group, a propoxy group, an isopropoxy group, a butoxy group, a secondary butoxy group, and a tertiary butoxy group.

Examples of the acyloxy group include formyloxy, acetoxy, propanoyloxy, butanoyloxy, pivaloyloxy, pentanoyloxy, phenylacetoxy, acetoacetoxy, benzoyloxy, and naphthoyloxy.

Examples of the allyloxy group include phenyloxy and naphthyloxy.

Examples of the alkenyloxy group include a vinyloxy group, an allyloxy group, a 1-propenyloxy group, an isopropenyloxy group, a 2-butenyloxy group, a 3-butenyloxy group, a 2-pentenyloxy group, a 3-methyl-3-butenyloxy group, and a 2-hexenyloxy group.

Examples of the polysiloxane segment having the structural units indicated by General Formula (S-1) above and/or General Formula (S-2) above include those having the following structures.

[Chemical Formula 5]

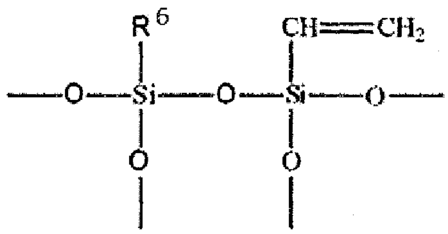

(1)

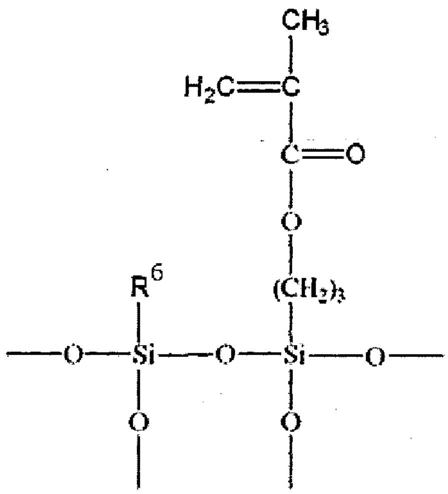

(2)

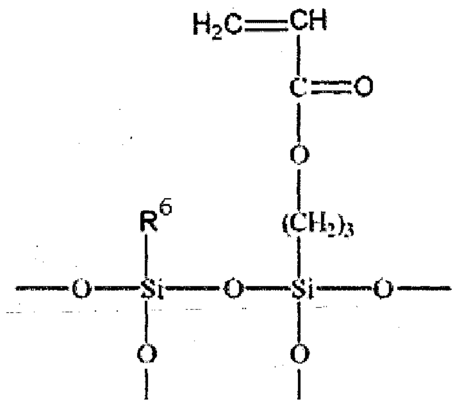

(3)

[Chemical Formula 6]

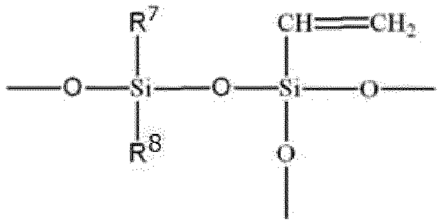

(4)

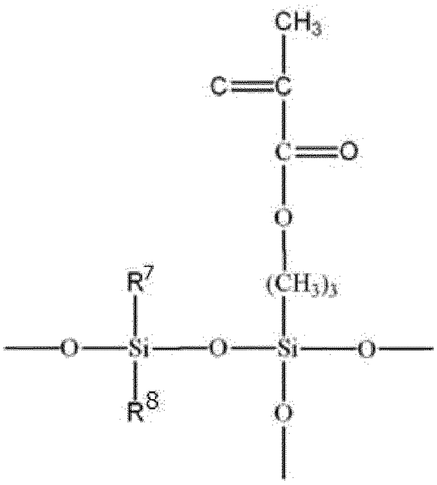

(5)

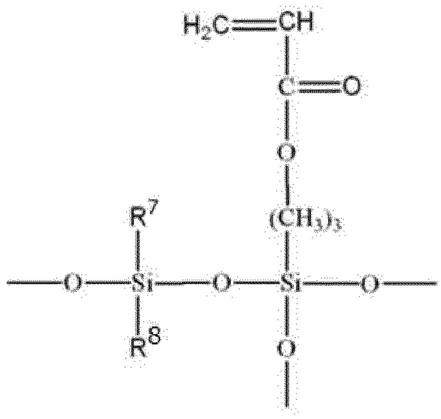

(6)

[Chemical Formula 7]

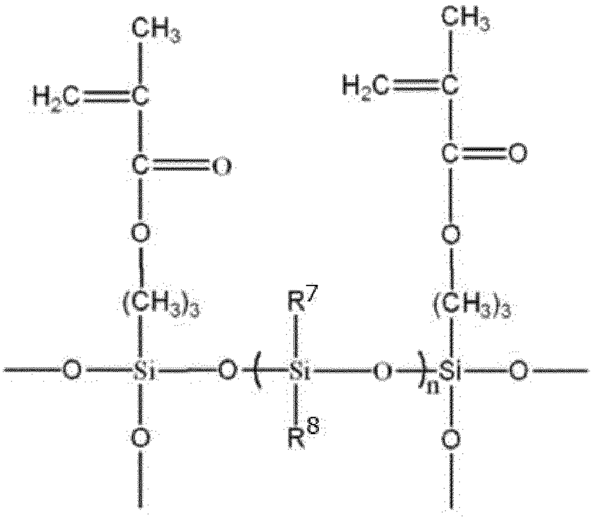

(8)

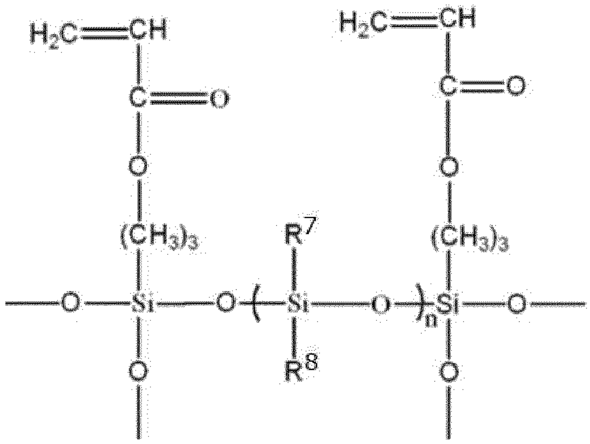

(9)

The polymer segment may have various functional groups as needed to the extent that they do not impair the advantageous effects of the present invention. Examples of such functional groups include a carboxy group, a blocked carboxy group, a carboxylic anhydride group, a tertiary amino group, a hydroxy group, a blocked hydroxy group, a cyclocarbonate group, an epoxy group, a carbonyl group, a primary amide group, secondary amide, a carbamate group, and a functional group represented by Structural Formula (S-5) below.

[Chemical Formula 8]

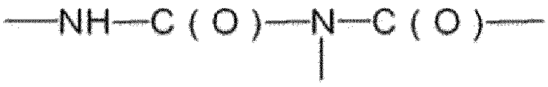

(S-5)

The polymer segment may also have a polymerizable double bond such as a vinyl group or a (meth)acryloyl group.

The polysiloxane compound for use in the present invention can be produced by known methods. Among them it is preferably produced by the methods shown in (1) to (3) below. However, these are not limiting.

(1) A method of preparing a polymer segment containing a silanol group and/or a hydrolyzable silyl group as a raw material for the polymer segment in advance, mixing this polymer segment and a silane compound containing a silane compound containing a silanol group and/or a hydrolyzable silyl group and a polymerizable double bond together, and performing a hydrolytic condensation reaction.

(2) This method prepares a polymer segment containing a silanol group and/or a hydrolyzable silyl group as a raw

material for the polymer segment in advance. A silane compound containing a silane compound containing a silanol group and/or a hydrolyzable silyl group and a polymerizable double bond is subjected to a hydrolytic condensation reaction to also prepare polysiloxane in advance. Then, the polymer segment and polysiloxane are mixed together, and a hydrolytic condensation reaction is performed.

(3) A method of mixing the polymer segment, a silane compound containing a silane compound containing a silanol group and/or a hydrolyzable silyl group and a polymerizable double bond, and polysiloxane together and performing a hydrolytic condensation reaction.

While the carbon source resin is not limited to a particular resin so long as it has good miscibility with the polysiloxane compound during the production of the precursor described above and can be carbonized in an inert atmosphere by high-temperature firing, synthetic resins having aromatic functional groups as well as natural chemical raw materials are preferably used. From the viewpoint of availability at low prices and exclusion of impurities, phenolic resins are more preferably used.

Examples of the synthetic resins include thermoplastic resins such as polyvinyl alcohol and polyacrylic acid and thermosetting resins such as phenolic resins and furan resins. Examples of the natural chemical raw materials include heavy oils, especially tar pitches such as coal tar, tar light oil, tar medium oil, tar heavy oil, naphthalene oil, anthracene oil, coal tar pitch, pitch oil, mesophase pitch, oxygen cross-linked petroleum pitch, and heavy oil.

In the precursor production step described above, the silicon nanoparticle suspension, the polysiloxane compound, and the carbon source resin are uniformly mixed together, and then the precursor is obtained through desolventing and drying. In mixing the raw materials together, apparatuses having general-purpose dispersing and mixing functions can be used, although there are no particular limitations. Examples of them include stirrers, ultrasonic mixers, and premix dispersion machines. In the desolventing and drying operations for the purpose of distilling off an organic solvent, dryers, vacuum dryers, spray dryers, or the like can be used.

For this negative electrode active material precursor, it is preferable to set the content of the silicon particles to 3 to 50% by mass, to contain 15 to 85% by mass of the solid content of the polysiloxane compound, and to contain 3 to 70% by mass of the solid content of the carbon source resin, and it is more preferable to set the solid content of the silicon nanoparticles to 8 to 40% by mass, the solid content of the polysiloxane compound to 20 to 70% by mass, and the solid content of the carbon source resin to 3 to 60% by mass.

<Step 2>

Step 2 is a step of high-temperature firing the negative electrode active material precursor in an inert atmosphere to completely decompose thermally decomposable organic components and to make the other main components into a fired product suitable for the negative electrode active material according to the present invention by the precise control of the firing conditions. Specifically, the "Si-O" bonds present in the raw material polysiloxane compound form a "Si-O-C" skeleton structure (referred to as SiOC in the following description of the present specification) by the progress of a dehydration condensation reaction by the energy of high-temperature treatment, and the carbon source resin, which has been homogenously dispersed, is carbonized to be converted as free carbon within a three-dimensional structure having the "Si-O-C" skeleton structure.

Step 2 above is firing the precursor obtained in Step 1 above in an inert atmosphere in line with a program of firing prescribed by a temperature rising rate, a retention time at a constant temperature, and the like. The highest attainable temperature is the highest temperature to be set and has a strong influence on the structure and performance of the negative electrode active material as the fired product. The highest attainable temperature in the present invention is preferably 900°C to 1,250°C and more preferably 1,000°C to 1,150°C. By performing firing in this temperature range, the microstructure of the negative electrode active material possessing the chemical bonding state of silicon and carbon described above can be precisely controlled, and the oxidation of silicon particles by extremely high-temperature firing can also be avoided, and thus excellent charge-discharge characteristics can be obtained.

While the method of firing is not limited to a particular method, a reaction apparatus having a heating function in an inert atmosphere may be used, and continuous or batch processing is possible. As to the apparatus for firing, fluidized bed reactors, rotary furnaces, vertical moving bed reactors, tunnel furnaces, batch furnaces, rotary kilns, or the like can be selected as appropriate in accordance with the purpose.

<Step 3>

Although the fired product obtained in Step 2 above may be used as it is as the negative electrode active material, it is preferable to selectively obtain one having appropriate particle size and surface area in order to enhance handleability when producing a negative electrode and to improve negative electrode performance. Step 3 is an optional step for such a purpose and is pulverizing the fired product obtained in Step 2 above and performing classification as

needed to obtain the negative electrode active material according to the present invention. Pulverization may be performed in one step or performed in several steps for a desired particle size. For example, when the fired product is in a lump or agglomerated particles of 10 mm or more, and the active material of 10 um is to be produced, coarse pulverization is performed with a jaw crusher, a roll crusher, or the like to make particles of about 1 mm, which are then made to be 100 um with a glow mill, a ball mill, or the like, which are then pulverized to 10 μm with a bead mill, a jet mill, or the like. To remove coarse particles that may be contained in the particles produced by pulverization or when fine particles are removed to adjust particle size distribution, classification is performed. The classifier used is a wind power classifier, a wet classifier, or the like, which varies in accordance with the purpose. In removing coarse particles, a method of classification including sifting is preferred because it can surely achieve the purpose. If a precursor mixture is controlled to a shape near the target particle size by spray drying or the like prior to the main firing, and the main firing is performed in that shape, the pulverization step can be reasonably omitted.

The average particle size (dynamic light scattering) of the negative electrode active material obtained by the above method of production is preferably 1 to 20 um and more preferably 1 um to 15 um in view of excellence in handleability and negative electrode performance.

<Production of Negative Electrode>

The negative electrode active material according to the present invention exhibits excellent charge-discharge characteristics as described above, and thus when it is used as a battery negative electrode, it exhibits favorable charge-discharge characteristics.

Specifically, slurry containing the negative electrode active material according to the present invention and an organic binding agent as essential components and other components such as conductivity aids as needed is made like a thin film on a current collector copper foil, which can be used as a negative electrode. The negative electrode can also be produced by adding known and customary carbon materials such as graphite to the above slurry.

Examples of these carbon materials such as graphite include natural graphite, artificial graphite, hard carbon, and soft carbon. The thus obtained negative electrode contains the negative electrode active material according to the present invention as the active material and is thus a negative electrode for a secondary battery having high capacity and excellent cycle characteristics and also having excellent initial coulombic efficiency. The negative electrode can be obtained by kneading the negative electrode active material for a secondary battery described above and a binder as an organic binding agent together with a solvent with a dispersion apparatus such as a stirrer, a ball mill, a super sand mill, or a pressure kneader to prepare negative electrode material slurry, which is then applied to a current collector to form a negative electrode layer, for example. It can also be obtained by forming paste-like negative electrode material slurry into a sheet shape, a pellet shape, or the like and integrating it with the current collector.

The organic binding agent is not limited to a particular organic binding agent. Examples thereof include styrene-butadiene rubber copolymers (SBR); (meth)acrylic copolymers containing ethylenically unsaturated carboxylic esters (methyl (meth)acrylate, ethyl (meth)acrylate, butyl (meth)acrylate, (meth)acrylonitrile, and hydroxyethyl (meth)acrylate, for example) and ethylenically unsaturated carboxylic acids (acrylic acid, methacrylic acid, itaconic acid, fumaric acid, and maleic acid, for example); and polymer compounds such as polyvinylidene fluoride, polyethylene oxide, polyepichlorohydrin, polyphosphazene, polyacrylonitrile, polyimide, polyamideimide, and carboxymethylcellulose (CMC).

These organic binding agents are dispersed or dissolved in water or dissolved in an organic solvent such as N-methyl-2-pyrrolidone (NMP) depending on their physical properties. The content ratio of the organic binding agent in a negative electrode layer of a lithium-ion secondary battery negative electrode is preferably 1 to 30% by mass, more preferably 2 to 20% by mass, and even more preferably 3 to 15% by mass.

The content ratio of the organic binding agent being 1% by mass or more gives better adhesion and more inhibits the destruction of a negative electrode structure due to expansion and contraction during charging and discharging. On the other hand, being 30% by mass or less more inhibits an increase in electrode resistance.

On this occasion, the negative electrode active material according to the present invention is easy to handle in terms of practical implementation in that it has high chemical stability and can employ a water-based binder.

The negative electrode material slurry may be mixed with a conductivity aid as needed. Examples of the conductivity aid include carbon black, graphite, acetylene black, and oxides and nitrides exhibiting conductivity. The use amount of the conductivity aid may be about 1 to 15% by mass with respect to the negative electrode active material according to the present invention.

The material and shape of the current collector are not limited to particular ones. For example, a strip of copper, nickel, titanium, stainless steel, or the like formed into a foil shape, a perforated foil shape, a mesh shape, or the like may be used. Porous materials such as porous metal (foamed metal) and carbon paper can also be used.

The method for applying the negative electrode material slurry to the current collector is not limited to a particular method. Examples thereof include known methods such as metal mask printing, electrostatic coating, dip coating, spray coating, roll coating, doctor blading, gravure coating, and screen printing. After the application, rolling treatment with a

flat press, a calender roll, or the like is preferably performed as needed.

Integration of the negative electrode material slurry formed into a sheet shape, a pellet shape, or the like with the current collector can be performed by known methods such as rolling, pressing, or a combination of these methods.

The negative electrode layer formed on the current collector and the negative electrode layer integrated with the current collector are preferably heat treated in accordance with the used organic binding agent. For example, when a known and customary water-based styrene-butadiene rubber copolymer (SBR) or the like is used, heat treatment may be performed at 100 to 130°C, whereas when an organic binding agent with polyimide or polyamideimide as its main skeleton is used, heat treatment is preferably performed at 150 to 450°C.

This heat treatment advances removal of the solvent and higher strength due to the hardening of the binder, which can improve adhesion between particles and between the particles and the current collector. This heat treatment is preferably performed in an inert atmosphere such as helium, argon, or nitrogen or a vacuum atmosphere in order to prevent oxidation of the current collector during the treatment.

The negative electrode is preferably pressed (subjected to pressurization) after the heat treatment. A negative electrode containing the negative electrode active material according to the present invention has an electrode density of preferably 1.0 to 1.8 $g/cm^3$, more preferably 1.1 to 1.7 $g/cm^3$, and even more preferably 1.2 to 1.6 $g/cm^3$. As to the electrode density, although higher density tends to improve adhesion and the volume capacity density of the electrode, extremely high density reduces the number of voids in the electrode, thereby weakening the volume expansion inhibition effect of silicon or the like, thus reducing cycle characteristics, and thus the optimum range is selected.

<Configuration of Full Battery>

As described above, the negative electrode containing the negative electrode active material according to the present invention has excellent charge-discharge characteristics and is thus preferably used for nonaqueous electrolyte secondary batteries and solid electrolyte secondary batteries and exhibits excellent performance when used as the negative electrode of nonaqueous electrolyte secondary batteries in particular, although there are no particular limitations so long as the batteries are secondary batteries.

A nonaqueous electrolyte secondary battery according to the present invention is characterized by the use of the negative electrode according to the present invention described above. For example, when used for a wet electrolyte secondary battery, the wet electrolyte secondary battery can be configured by placing a positive electrode and the negative electrode according to the present invention facing each other via a separator and injecting an electrolyte.

The positive electrode can be obtained by forming a positive electrode layer on the surface of a current collector, similarly to the negative electrode. For the current collector of this case, a strip of metal or alloy such as aluminum, titanium, or stainless steel formed into a foil shape, a perforated foil shape, a mesh shape, or the like can be used.

The positive electrode material for use in the positive electrode layer is not limited to a particular material. Among nonaqueous electrolyte secondary batteries, when a lithium-ion secondary battery is produced, metallic compounds, metal oxides, metal sulfides, or conductive polymer materials capable of doping or intercalating lithium ions may be used, for example, with no particular limitations. Examples thereof include lithium cobaltate ($LiCoO_2$), lithium nickelate ($LiNiO_2$), lithium manganate ($LiMnO_2$), their composite oxides ($LiCoxNiyMnzO_2$, x + y + z = 1), lithium manganese spinel ($LiMn_2O_4$), lithium vanadium compounds, $V_2O_5$, $V_6O_{13}$, $VO_2$, $MnO_2$, $TiO_2$, $MoV_2O_8$, $TiS_2$, $V_2S_5$, $VS_2$, $MoS_2$, MoSs, $Cr_3O_8$, $Cr_2O_5$, olivine type $LiMPO_4$ (M: Co, Ni, Mn, and Fe), conductive polymers such as such as polyacetylene, polyaniline, polypyrrole, polythiophene, and polyacene, and porous carbon, which can be used singly or in mixture.

As the separator, nonwoven fabrics, cloth, microporous films, or combinations thereof mainly made of polyolefins such as polyethylene and polypropylene can be used, for example. When a structure in which the positive electrode and the negative electrode of the nonaqueous electrolyte secondary battery to be produced are not in direct contact is employed, there is no need to use any separator.

As the electrolyte, for example, what is called an organic electrolyte can be used, in which a lithium salt such as $LiClO_4$, $LiPF_6$, $LiAsF_6$, $LiBF_4$, or $LiSO_3CF_3$ is dissolved in a nonaqueous solvent as a single body or a mixture of two or more components such as ethylene carbonate, propylene carbonate, butylene carbonate, vinylene carbonate, fluoroethylene carbonate, cyclopentanone, sulfolane, 3-methylsulfolane, 2,4-dimethylsulfolane, 3-methyl-1,3-oxazolidin-2-one, γ-butyrolactone, dimethyl carbonate, diethyl carbonate, ethylmethyl carbonate, methylpropyl carbonate, butylmethyl carbonate, ethylpropyl carbonate, butylethyl carbonate, dipropyl carbonate, 1,2-dimethoxyethane, tetrahydrofuran, 2-methyl tetrahydrofuran, 1,3-dioxolane, methyl acetate, or ethyl acetate.

While the structure of the nonaqueous electrolyte secondary battery according to the present invention is not limited to a particular structure, it is generally structured by winding the positive electrode, the negative electrode, and the separator, which is provided as needed, into a flat spiral shape to make a wound electrode plate group or stacking them into a flat plate shape to make a laminated electrode plate group and encapsulating these electrode plate groups in an outer casing. A half cell for use in the examples of the present invention mainly includes the silicon-containing active material according to the present invention in its negative electrode, and simplified evaluation is performed with

metallic lithium used for the counter electrode. This is for comparing the cycle characteristics of the active material itself more clearly. As described above, by adding a small amount to a compound mainly containing a graphite-based active material (a capacity of around 340 mAh/g), the negative electrode capacity can be reduced to around 400 to 700 mAh/g, which is much higher than the existing negative electrode capacity, and cycle characteristics can be improved.

<Others Including Applications>

The nonaqueous electrolyte secondary battery containing the negative electrode active material according to the present invention is used as, with no particular limitations, paper batteries, button batteries, coin batteries, laminated batteries, cylindrical batteries, square batteries, and the like. The negative electrode active material according to the present invention described above can also be applied to electrochemical apparatuses in general using insertion and desorption of lithium ions as a charge-discharge mechanism, such as hybrid capacitors and solid lithium secondary batteries.

[Examples]

The following describes the present invention in more detail with examples. Parts and % shall be on a mass basis unless otherwise noted.

"Production of Polysiloxane Compounds"

(Synthesis Example 1: Synthesis of Condensate (m-1) of Methyltrimethoxysilane)

Methyl trimethoxysilane (hereinafter abbreviated as "MTMS") in 1,421 parts by mass was charged into a reaction vessel including a stirrer, a thermometer, a dropping funnel, a cooling tube, and a nitrogen gas inlet, and the temperature thereof was raised up to 60°C. Next, to the reaction vessel, a mixture of 0.17 part by mass of isopropyl acid phosphate ("Phoslex A-3" manufactured by SC Organic Chemical Co., Ltd.) and 207 parts by mass of deionized water was added dropwise over 5 minutes, and then the mixture was stirred at a temperature of 80°C for 4 hours to be caused to undergo a hydrolysis condensation reaction.

The condensate obtained by the hydrolysis condensation reaction was distilled at a temperature of 40 to 60°C and a reduced pressure of 40 to 1.3 kPa (which refers to a condition, with a reduced pressure of 40 kPa at the time of starting distilling off methanol, of reducing pressure to finally become 1.3 kPa. The same applies to the following.), and methanol and water produced in the reaction process were removed to obtain 1,000 parts by mass of liquid containing a condensate (m-1) of MTMS with a number average molecular weight of 1,000 (effective component 70% by mass). The effective component is calculated by a value obtained by dividing a theoretical yield (parts by mass) when all methoxy groups of silane monomers such as MTMS have undergone the condensation reaction by an actual yield (parts by mass) after the condensation reaction [theoretical yield (parts by mass) when all methoxy groups of silane monomers have undergone condensation reaction/actual yield (parts by mass) after condensation reaction].

[Methods of Evaluation]

The methods for evaluating the negative electrode active material in the present examples are as follows.

Specific surface area (BET): It was measured by nitrogen adsorption measurement using a specific surface area measurement apparatus (BELSORP-mini manufactured by BELJAPAN).

True density: It was measured using a true density measurement apparatus (AccuPyc II 1340 manufactured by Shimadzu Corporation).

Powder X-ray diffraction (XRD): It was measured at room temperature in the air using an X-ray diffractometer (SmartLab manufactured by Rigaku Corporation).

Average particle size (D50): It was measured using a laser diffraction particle size distribution analyzer (SALD-3000J manufactured by Shimadzu Corporation).

Crystallite size: The crystallite size was determined by the Scherrer equation described in [0015] above based on the FWHM of a diffraction peak ($2\theta$ = 28.4°) attributed to the Si (111) crystal plane based on a measurement result of powder X-ray diffraction (XRD) using the Cu-K$\alpha$ line.

Differential thermal analysis (TG-DTA): It was measured using a thermal analyzer (Thermo plus EV02 manufactured by Rigaku Corporation).

[Example 1]

A negative electrode active material according to the present invention was produced as follows.

Zirconia beads (particle size range: 0.1 mm to 0.2 mm) and 100 ml of methyl ethyl ketone solvent (MEK) were added to a container (150 ml) of a small bead mill apparatus, and silicon powder (manufactured by Wako, average particle size 3 to 5 um) and a cationic dispersant solution (BYK Japan KK: BYK 145) were put thereinto, and bead-milling wet pulverization was performed to obtain silicon slurry in the form of a dark brown liquid. The average particle size (D50) of the silicon pulverized particles was 41 nm by light scattering measurement method and TEM observation.

The polysiloxane resin (PSi resin: average molecular weight 3,500) produced in the above synthesis example and a phenolic resin (Ph resin: average molecular weight 3,000) were added to each other at a resin solid weight composition ratio of 10:90, the silicon slurry (average particle size 41 nm) was added to match the amount of Si particles in the product after firing to 50% by weight, they were thoroughly mixed together in a stirrer, and then desolventing and drying under reduced pressure were performed to obtain a negative electrode active material precursor. Subsequently, the negative electrode active material precursor was high-temperature fired at 1,100°C for 4 hours in a nitrogen atmosphere to obtain a black solid, which was then pulverized with a planetary ball mill to obtain powder of a negative electrode active material with an average particle size (D50) of about 6.9 μm.

The true density and the specific surface area (BET) of the negative electrode active material obtained in Example 1 were 1.77 g/cm$^3$ and 19.2 m$^2$/g, respectively, and based on the FWHM of the diffraction peak ($2\theta$ = 28.4°) attributed to the Si (111) crystal plane based on the measurement result of the powder X-ray diffraction (XRD) using the Cu-K$\alpha$ line, the crystallite size was determined, by the Scherrer equation, to be 15.3 nm. Differential thermal analysis (TG-DTA) was performed in the air up to 1,200°C, showing a weight loss rate of 43% and a carbonaceous phase content in the matrix of the negative electrode active material of 86%. The measurement result of the powder X-ray diffraction (XRD) in Example 1 is as illustrated in FIG. 1.

Next, using the negative electrode active material obtained in Example 1, a half cell and a full cell were produced by the following method, and a secondary battery charge-discharge test was conducted.

The negative electrode active material powder (80 parts), a conductivity aid (acetylene black, 10 parts), and a binder (CMC + SBR, 10 parts) were mixed together to prepare slurry, which was formed as a film on copper foil. After drying it under reduced pressure at 110°C, the half cell was produced with a Li metal foil as the counter electrode, and charge-discharge characteristics were evaluated using a secondary battery charge-discharge test apparatus (manufactured by Hokuto Corporation) (cutoff voltage range: 0.005 to 1.5 V). The charge-discharge measurement results showed an initial discharge capacity of 1,350 mAh/g and an initial coulombic efficiency of 82%. For the evaluation of the full cell, a positive electrode film was produced using a single-layer sheet including, as positive electrode materials, $LiCoO_2$ as a positive electrode active material and an aluminum foil as a current collector, and a negative electrode film was produced by mixing graphite powder and the active material powder at a designed discharge capacity value of 450 mAh/g. Using a nonaqueous electrolyte solution in which lithium hexafluorophosphate was dissolved in a 1/1 (volume ratio) mixed liquid of ethylene carbonate and diethyl carbonate at a concentration of 1 mol/L as a nonaqueous electrolyte, a coin type lithium-ion secondary battery including a 30 μm-thick polyethylene microporous film as a separator was produced. The laminated lithium-ion secondary battery was charged under room temperature at a constant current of 1.2 mA (0.25c based on the positive electrode) until the test cell voltage reached 4.2 V, and after reaching 4.2 V, charging was performed with the current decreased so as to keep the cell voltage at 4.2 V, and discharging (0.5c based on the positive electrode) was performed to 2.5 V to determine discharge capacity. The 300-cycle capacity retention rate was 79% as listed in Table 1.

[Examples 2 to 11]

Negative electrode active materials were produced in the same manner as in Example 1 except that the particle size of the used silicon particles and the resin composition ratio (PSi resin:Ph resin weight ratio) were changed as listed in Table 1 and were evaluated, and further, half cells and full cells were produced to conduct secondary battery charge-discharge tests. Table 1 lists the results.

[Example 12]

A negative electrode active material precursor was produced on the same conditions as in Example 1, was high-temperature fired, and was then pulverized to produce an active material with an average particle size (D50) of about 2.0 um. The true density and the specific surface area (BET) of the powder showed 1.79 g/cm$^3$ and 25.3 m$^2$/g, respectively. The size of the Si crystallite, which was determined by the Scherrer equation based on the FWHM of the diffraction peak ($2\theta$ = 28.4°) attributed to the Si (111) crystal plane based on the measurement result of the powder X-ray diffraction (XRD) using the Cu-K$\alpha$ ray, was 15.3 nm. The charge-discharge measurement results of the half cell

showed an initial discharge capacity of 1,330 mAh/g and an initial coulombic efficiency of 810, while the measurement result of the full cell showed a 300-cycle capacity retention rate of 77%.

[Example 13]

After obtaining powder of a negative electrode active material under the same conditions as in Example 8, CVD carbon coating processing was performed to produce a carbon film with a thickness of 23 nm on the active material particles. The average particle size of the active material powder was about 7.5 um, the true density and the specific surface area (BET) showed 2.31 g/cm$^3$ and 5.4 m$^2$/g, respectively, and the size of the Si crystallite was 20.6 nm. The charge-discharge measurement results of the half cell showed an initial discharge capacity of 1,510 mAh/g and an initial coulombic efficiency of 84.4%, while the measurement result of the full cell showed a 300-cycle capacity retention rate of 85%.

[Example 14]

After obtaining powder of a negative electrode active material under the same conditions as in Example 13, CVD carbon coating processing was performed to produce a carbon film with a thickness of about 210 nm on the active material particles. The average particle size of the active material powder was about 8.0 um, the true density and the specific surface area (BET) of the powder showed 2.11 g/cm$^3$ and 3.4 m$^2$/g, respectively, and the size of the Si crystallite was 20.6 nm. The charge-discharge measurement results of the half cell showed an initial discharge capacity of 1,450 mAh/g and an initial coulombic efficiency of 84.5%, while the measurement result of the full cell showed a 300-cycle capacity retention rate of 86%.

[Example 15]

After obtaining powder of a negative electrode active material under the same conditions as in Example 13, CVD carbon coating processing was performed to produce a carbon film with a thickness of about 400 nm on the active material particles. The average particle size of the active material powder was about 8.8 um, the true density and the specific surface area (BET) of the powder showed 2.01 g/cm$^3$ and 1.2 m$^2$/g, respectively, and the size of the Si crystallite was 20.6 nm. The charge-discharge measurement results of the half cell showed an initial discharge capacity of 1,360 mAh/g and an initial coulombic efficiency of 83.5%, while the measurement result of the full cell showed a 300-cycle capacity retention rate of 79%.

[Comparative Example 1]

Using silicon slurry with an average particle size of 210 nm, the polysiloxane resin and the phenolic resin were mixed together at a composition ratio of 10:90, were dried under reduced pressure, and were high-temperature fired at 1,100°C for 4 hours in a nitrogen atmosphere to obtain a black solid. The measurement result of the X-ray diffraction showed a Si crystallite size of 45.3 nm. Differential thermal analysis (TG-DTA) was performed in the air up to 1,200°C, showing a weight loss rate of 43.2% and a carbonaceous phase content in the matrix of the active material of 86.4%. The charge-discharge measurement result of the half cell showed an initial discharge capacity of 1,770 mAh/g and an initial coulomb efficiency of 86%, while the charge-discharge measurement result of the full cell showed a capacity retention rate after 300 cycles at room temperature reduced to 56%. The measurement result of the X-ray diffraction in Comparative Example 1 is as illustrated in FIG. 2.

[Comparative Example 2]

Using Si slurry with an average particle size of 350 nm, the polysiloxane resin and the phenolic resin were mixed together at a composition ratio of 50:50 to produce a precursor. For the others, the same operations as in Comparative Example 1 were performed. The measurement result of the X-ray diffraction showed a Si crystallite size of 53.1 nm. The charge-discharge measurement results of the half cell showed an initial discharge capacity of 1,830 mAh/g and an initial coulomb efficiency of 87%, while the charge-discharge measurement result of the full cell showed a capacity retention rate after 300 cycles at room temperature markedly reduced to 48%.

[Comparative Example 3]

Using Si slurry with an average particle size of 1,000 nm, the polysiloxane resin and the phenolic resin were mixed together at a composition ratio of 50:50 to produce a precursor. For the others, the same operations as in

Comparative Example 1 were performed. The measurement result of the X-ray diffraction showed that the size of the Si crystallite was not calculable by the Scherrer equation, and it was estimated to be 200 nm or more. The measurement result of the thermal analysis showed an active material weight loss rate of 24.5% and a carbonaceous phase content in the matrix of 49%. The charge-discharge measurement result of the half cell showed an initial discharge capacity of 1,850 mAh/g and an initial coulomb efficiency of 88%, while the charge-discharge measurement result of the full cell showed a capacity retention rate after 300 cycles at room temperature significantly reduced to 32%.

[Table 1]

| | PSi/Ph weight ratio % | Si average particle size nm | TG-DTA weight loss | Carbon content in matrix | Si crystallite size nm | True density g/cm$^3$ | Specific surface area m$^2$/g | Active material average particle size μm | Carbon coating film thickness nm | Initial discharge capacity mAh/g | Initial efficiency % | Capacity retention rate@300 times |
|---|---|---|---|---|---|---|---|---|---|---|---|---|
| Example 1 | 10:90 | 41 | 43.0 % | 86.0 % | 15.3 | 1.77 | 19.2 | 6.9 | 0 | 1,350 | 82.0 % | 79% |
| Example 2 | 20:80 | 41 | 38.1 % | 76.2 % | 15.1 | 1.90 | 17.5 | 7.0 | 0 | 1,360 | 81.5 % | 83% |
| Example 3 | 30:70 | 41 | 34.0 % | 68.0 % | 15.2 | 2.00 | 16.3 | 7.1 | 0 | 1,390 | 81.2 % | 85% |
| Example 4 | 40:60 | 41 | 28.5 % | 57.0 % | 15.2 | 2.10 | 12.7 | 7.3 | 0 | 1,400 | 81.0 % | 87% |
| Example 5 | 50:50 | 41 | 24.3 % | 48.6 % | 15.1 | 2.20 | 10.1 | 7.1 | 0 | 1,420 | 80.8 % | 88% |
| Example 6 | 60:40 | 41 | 18.7 % | 37.4 % | 15.0 | 2.30 | 8.1 | 7.2 | 0 | 1,430 | 80.5 % | 90% |
| Example 7 | 50:50 | 50 | 24.1 % | 48.2 % | 19.4 | 2.23 | 9.8 | 6.9 | 0 | 1,450 | 83.0 % | 86% |
| Example 8 | 50:50 | 62 | 24.5 % | 49.0 % | 20.6 | 2.31 | 9.4 | 7.2 | 0 | 1,520 | 84.0 % | 84% |
| Example 9 | 50:50 | 83 | 25.2 % | 48.4 % | 25.1 | 2.36 | 9.1 | 7.2 | 0 | 1,630 | 85.1 % | 83% |
| Example 10 | 50:50 | 90 | 24.3 % | 48.6 % | 28.5 | 2.37 | 8.5 | 7.1 | 0 | 1,660 | 85.3 % | 82% |
| Example 11 | 50:50 | 120 | 24.1 % | 48.2 % | 35.2 | 2.39 | 7.5 | 7.2 | 0 | 1,750 | 86.2 % | 78% |
| Example 12 | 10:90 | 41 | 43.0 % | 86.0 % | 15.3 | 1.79 | 25.3 | 2.0 | 0 | 1,330 | 81.0 % | 77% |
| Example 13 | 50:50 | 62 | 24.5 % | 49.0 % | 20.6 | 2.31 | 5.4 | 7.5 | 23 | 1,510 | 84.4 % | 85% |
| Example 14 | 50:50 | 62 | 24.5 % | 49.0 % | 20.6 | 2.11 | 3.4 | 8.0 | 210 | 1,450 | 84.5 % | 86% |
| Example 15 | 50:50 | 62 | 24.5 % | 49.0 % | 20.6 | 2.01 | 1.2 | 8.8 | 400 | 1,360 | 83.5 % | 79% |
| Comp. Example 1 | 10:90 | 210 | 43.2 % | 86.4 % | 45.3 | 1.90 | 21.0 | 6.8 | 0 | 1,770 | 86.0 % | 56% |
| Comp. Example 2 | 50:50 | 350 | 24.3 % | 48.6 % | 53.1 | 2.41 | 8.5 | 6.7 | 0 | 1,830 | 87.0 % | 48% |
| Comp. Example 3 | 50:50 | 1,000 | 24.5 % | 49.0 % | >200 | 2.43 | 7.5 | 7.1 | 0 | 1,850 | 88.0 % | 32% |

It can be seen from Table 1 above that when the crystallite size of the silicon nanoparticles is 40 nm or less, the capacity retention rate is good.

## Claims

1. A negative electrode active material comprising composite particles in which silicon nanoparticles are dispersed inside a matrix containing silicon oxycarbide and a carbonaceous phase, the negative electrode active material having a crystalline particle size of 40 nm or less determined by the Scherrer method from a full width at half maximum (FWHM) of a diffraction line attributed to Si(111) around $2\theta = 28.4°$ in analysis of an X-ray diffraction pattern.

2. The negative electrode active material according to claim 1, wherein the matrix in the composite particles has a carbonaceous phase content in a range of 30% by weight to 85% by weight of a matrix total weight.

3. The negative electrode active material according to claim 1, wherein the matrix in the composite particles has a carbonaceous phase content in a range of 40% by weight to 70% by weight of a matrix total weight.

4. The negative electrode active material according to any one of claims 1 to 3, wherein the composite particles have a specific surface area (BET) in a range of 1 $m^2/g$ to 20 $m^2/g$.

5. The negative electrode active material according to any one of claims 1 to 4, wherein the composite particles have a true density higher than 1.60 $g/cm^3$ and less than 2.40 $g/cm^3$.

6. The negative electrode active material according to any one of claims 1 to 5, wherein the composite particles each have a surface with a coating layer mainly containing low crystalline carbon with an average thickness of 10 nm or more and 300 nm or less.

7. A nonaqueous electrolyte secondary battery comprising the negative electrode active material according to any one of claims 1 to 6.

[Fig. 1]

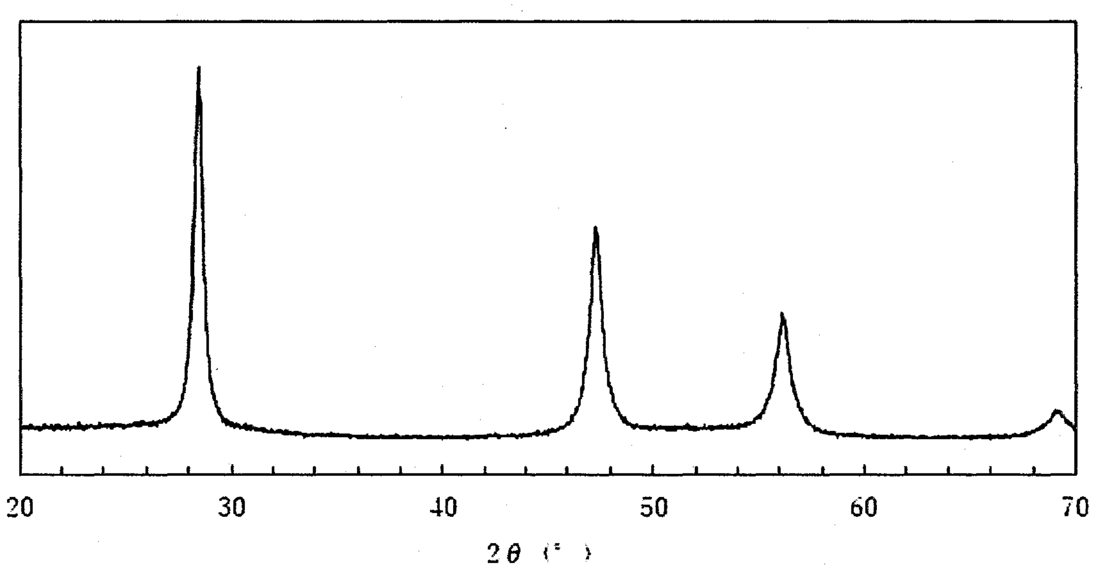


[Fig. 2]

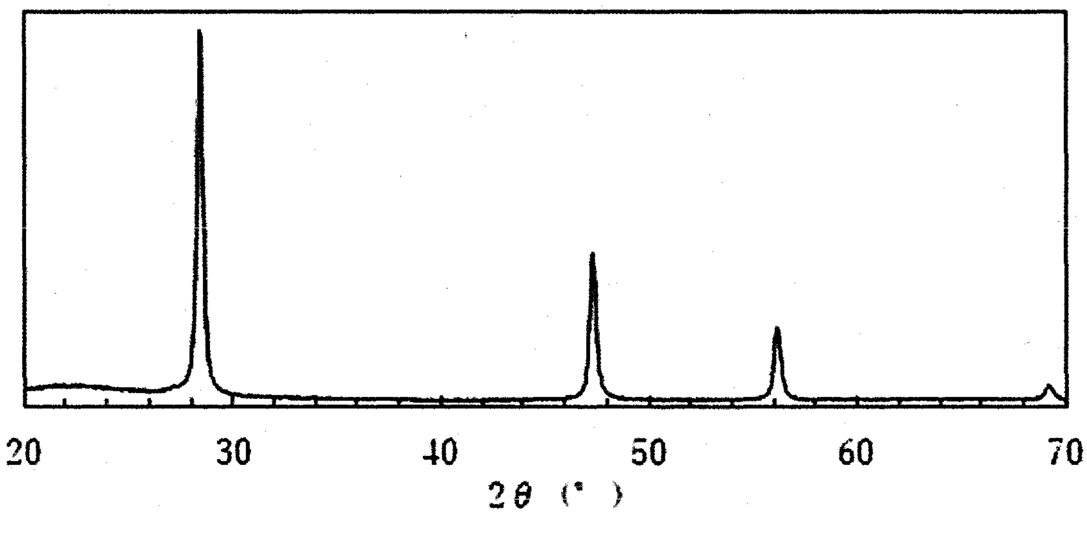

**INTERNATIONAL SEARCH REPORT**

International application No. **PCT/JP2021/044184**

**A. CLASSIFICATION OF SUBJECT MATTER**

***C01B 33/02***(2006.01)i; ***H01M 4/36***(2006.01)i; ***H01M 4/38***(2006.01)i; ***H01M 4/58***(2010.01)i; ***H01M 4/587***(2010.01)i; ***H01G 11/30***(2013.01)i
FI: H01M4/38 Z; H01M4/36 A; H01M4/58; H01M4/587; H01M4/36 C; C01B33/02 Z; H01G11/30

According to International Patent Classification (IPC) or to both national classification and IPC

**B. FIELDS SEARCHED**

Minimum documentation searched (classification system followed by classification symbols)

C01B33/02; H01M4/36; H01M4/38; H01M4/58; H01M4/587; H01G11/30

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-138895 A (JNC CORP) 03 September 2020 (2020-09-03) | 1-7 |
| A | JP 2017-62974 A (TOKAI CARBON KK) 30 March 2017 (2017-03-30) | 1-7 |
| A | JP 2016-139579 A (TORAY INDUSTRIES) 04 August 2016 (2016-08-04) | 1-7 |
| A | JP 2016-522139 A (ROBERT BOSCH GMBH) 28 July 2016 (2016-07-28) | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 February 2022** | **08 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/044184**

| Patent document cited in search report | Publication date (day/month/year) | Patent family member(s) | Publication date (day/month/year) |
|---|---|---|---|
| JP 2020-138895 A | 03 September 2020 | US 2020/0280057 A1<br>CN 111640917 A | |
| JP 2017-62974 A | 30 March 2017 | (Family: none) | |
| JP 2016-139579 A | 04 August 2016 | (Family: none) | |
| JP 2016-522139 A | 28 July 2016 | US 2016/0079591 A1<br>WO 2014/172914 A1<br>EP 2989671 A1<br>CN 105409035 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018502029 W
- JP 2019114559 A
- JP 5892264 B